# EUROPÄISCHE PATENTSCHRIFT

(11) **EP 3 580 769 B1**
(45) Veröffentlichungstag und Bekanntmachung des Hinweises auf die Patenterteilung: **05.05.2021**
(21) Anmeldenummer: 18704160.3
(22) Anmeldetag: 24.01.2018
(51) Int. Cl.: H01F 7/18, H01F 7/16, F16K 31/08

(54) **BISTABILE MAGNETVENTIL-EINRICHTUNG UND VERFAHREN ZU DEREN ÜBERWACHUNG**
BISTABLE SOLENOID VALVE DEVICE, AND METHOD FOR MONITORING IT
DISPOSITIF À ÉLECTROVANNE BISTABLE ET PROCÉDÉ DE SURVEILLANCE DE CELUI-CI

(30) Priorität: 11.02.2017 DE 102017001319
(43) Veröffentlichungstag der Anmeldung: 18.12.2019
(73) Patentinhaber: WABCO Europe BVBA, 1170 Brussels (BE)
(72) Erfinder: GOERS, Andreas, 30982 Pattensen (DE); TEICHMANN, Andreas, 30916 Isernhagen (DE)
(74) Vertreter: Rabe, Dirk-Heinrich
(86) Internationale Anmeldenummer: PCT/EP2018/051746
(87) Internationale Veröffentlichungsnummer: WO 2018/145904

(56) Entgegenhaltungen:
- EP-A1- 3 086 334
- DE-A1-102007 016 787
- DE-A1-102011 081 921

## Beschreibung

Die Erfindung betrifft eine bistabile Magnetventil-Einrichtung für ein Fluidsystem, das insbesondere ein Druckluft-System eines Nutzfahrzeugs sein kann, sowie ein Verfahren zum Überwachen einer derartigen bistabilen Magnetventil-Einrichtung.

Bistabile Magnetventile werden in einem Fluidsystem, z. B. einer Feststellbremse eines Druckluftsystems eines Nutzfahrzeugs, eingesetzt und ermöglichen eine Verstellung zwischen zwei Ventil-Positionen, die beide im stromlosen Zustand des Magnetventils gehalten werden können. Zur Ansteuerung ist eine Endstufe vorgesehen, die eine Steuereinrichtung zum Ansteuern des bistabilen Magnetventils und ggf. weitere Komponenten aufweist; das Magnetventil und die weiteren Komponenten bilden somit die Magnetventil-Einrichtung.

Das bistabile Magnetventil weist im Allgemeinen einen Permanentmagneten und einen relativ zum Permanentmagnet verstellbaren Anker auf, der in seinen beidseitigen Ankerpositionen jeweils einen Eisenkreis bzw. Permanentmagnet-Kreis bildet, der den Anker in der jeweiligen Ankerposition hält. Hierzu kann insbesondere ein Joch vorgesehen sein, das zusammen mit einem ersten und zweiten Kern, dem Anker und dem Permanentmagnet die Eisenkreise ausbildet. Der Anker liegt in seinen Ankerpositionen jeweils an einem der beiden Eisenkerne direkt bzw. ohne Luftspalt an, so dass eine hohe magnetische Flussdichte (ein starkes magnetisches Feld) ausgebildet wird; zu dem anderen Kern hin bildet sich ein Luftspalt aus, der den anderen Eisenkreis schwächt.

Die Umschaltvorgänge zwischen den Ankerpositionen werden durch eine erste und zweite Schaltspule vorgenommen, die z. B. stationär bzw. im Joch, aber z. B. auch als Ankerspulen am beweglichen Anker ausgebildet sein können. Für die Umschaltvorgänge wird z. B. ein Spannungspuls über eine Spannungsrampe oder als Rechteckpuls auf die jeweilige Schaltspule gegeben, so dass ein erstes oder zweites Elektromagnet-Feld der Permanentmagnet-Ausbildung überlagert wird und den Anker in die jeweils andere Ankerposition verstellt, wobei die jeweils andere Schaltspule stromlos bleibt.

Außerhalb der Schaltvorgänge, d. h. ohne Anlegen eines Schaltstroms, verbleibt somit der Anker im Allgemeinen in seiner jeweiligen Ankerposition. Aufgrund z. B. eines mechanischen Schocks kann jedoch grundsätzlich eine Verstellung des Ankers erfolgen, wenn die magnetische Haltekraft überwunden wird und der Anker in die andere, wiederum selbsttätig gehaltene Ankerposition verstellt wird.

Durch die Strompulse sind grundsätzlich sichere Verstellvorgänge möglich. Aufgrund Verschmutzungen wie z. B. Abrieb und Verschleiß kann jedoch ein Festsetzen oder eine Reibung am Anker auftreten, die die sichere Ankerverstellung gefährdet. Auch können während des Schaltvorgangs auftretende plötzliche mechanische Erschütterungen die mechanische Verstellung des Ankers gefährden.

Aus dem Stand der Technik sind bistabile Magnetventil-Einrichtungen bekannt. Aus der DE 10 2011 081921 A1 geht eine bistabile Magnetventil-Einrichtung für ein FluidSystem hervor. Die bistabile Magnetventil-Einrichtung weist eine Auswerteinrichtung zur Messung einer induzierten Spulenspannung und/oder eines induzierten Spulenstromes an mindestens einer nicht bestromten Schaltspule auf. Darüber hinaus ist die Auswerteinrichtung dazu geeignet das Schaltverhalten eines Ankers der bistabilen Magnetventil-Einrichtung zu bewerten.

Weiterhin ist in der DE 10 2007 016787 A1 eine als Vergleichseinheit definierte Auswerteinrichtung zur Messung einer induzierten Spulenspannung oder eines induzierten Spulenstroms an mindestens einer nicht bestromten Schaltspule offenbart.

Die EP 3 086 334 A1 der Anmelderin offenbart eine bistabile Magnetventil-Einrichtung. Eine erste und zweite Elektromagneteinrichtung dient zur Ausbildung eines ersten und zweiten Elektromagnetfeldes, die über den Anker, das magnetische Joch und jeweils einen der Kerne verlaufen. Hierbei ist vorgesehen, dass die Permanentmagneteinrichtung in radialer Richtung relativ zu der Axialrichtung magnetisiert ist. Vorzugsweise werden für die beiden Schaltvorgänge zwischen den Ankerstellungen jeweils beide Elektromagneteinrichtungen bestromt.

Der Erfindung liegt die Aufgabe zugrunde, eine Magnetventil-Einrichtung und ein Verfahren zu deren Überwachung zu schaffen, die einen sicheren Betrieb gewährleisten.

Diese Aufgabe wird durch eine bistabile Magnetventil-Einrichtung nach Anspruch 1, ein Verfahren zum Überwachen einer bistabilen Magnetventil-Einrichtung nach Anspruch 15, sowie einer elektropneumatischen Feststellbremse mit einer Magnetventil-Einrichtung nach Anspruch 16 gelöst. Die Unteransprüche beschreiben bevorzugte Weiterbildungen. Hierbei ist ergänzend eine elektropneumatische Handbremse mit einer derartigen Magnetventil-Einrichtung vorgesehen.

Es wird eine induzierte Spulenspannung und/oder ein induzierter Spulenstrom, die bzw. der in einer unbestromten Schaltspule ausgebildet wird, gemessen und bewertet. Hierbei wird erkannt, dass das Schaltverhalten des Ankers über die nichtbestromte Spule überwacht werden kann, da die Verstellung des Ankers bzw. ein Schalten des Ankers einen Strom bzw. eine Spannung in der nicht bestromten Spule induziert.

Das Schaltverhalten wird erfindungsgemäß während eines - nichtbestromten - Ruhemodus auf das ordnungsgemäße Fehlen eines Schaltvorgangs hin überwacht.

Es wird hierbei erkannt, dass grundsätzlich zwei physikalische Effekte auftreten können, die zur Induktion einer Spannung in der nicht bestromten Spule führen können:
Der Transformator-Effekt erfolgt durch die aktiv schaltende Schaltspule, die in der nicht-schaltenden (passiven) Schaltspule direkt eine Spannung erzeugt. Somit wirkt das bistabile Magnetventil mit seinen Schaltspulen und den Eisenkreisen wie ein Transformator: die bestromte Schaltspule erzeugt einen sich zeitlich ändernden magnetischen Fluss, der wiederum in der nicht bestromten Schaltspule eine Spannung induziert.

Der Generator-Effekt beruht darauf, dass der Anker magnetisiert ist und somit die Verstellung des Ankers relativ zu der Spulen-Anordnung bzw. den Eisenkreisen eine Spannung induziert. Hierbei ist der magnetisierte Anker im Allgemeinen in einem Ankerfreiraum in den Schaltspulen aufgenommen, so dass der Anker durch die Schaltspulen hindurch bewegt wird, so dass direkt in den umgebenden Schaltspulen eine Spannung induziert wird. Bei der nicht bestromten Schaltspule kann diese induzierte Spannung direkt ausgelesen werden.

Indem somit ein induziertes elektrisches Verhalten der nichtbestromten Schaltspule überwacht wird, kann ohne zusätzliche Mittel oder Einrichtungen in dem Eisenkreis bzw. dem Magnetventil auf das Schaltverhalten geschlossen werden. Es kann somit eine induzierte Spannung bzw. ein induzierter Strom nachfolgend von einer Auswerteeinrichtung aufgenommen und ausgewertet werden, ohne dass ein direkter apparativer Mehraufwand in der Magnetventil-Einrichtung erforderlich ist.

Es wird somit insbesondere auch erkannt, dass es nicht erforderlich ist, den schaltenden Spulenstrom zu untersuchen oder die Ankerbewegung durch zusätzliche Sensoren usw. zu überwachen, da bereits das induzierte elektrische Verhalten hinreichende Rückschlüsse über die Bewegung des Ankers ermöglicht.

Indem somit die Verstellung des Ankers überwacht wird, können Fehler bzw. Gefahrensituationen bereits in ihrer Entstehung überwacht werden, bevor eine schwerwiegende Störung oder Gefahr durch die vollständig ausgeführte Verstellung des Ankers entsteht, d. h. insbesondere eine nicht gewollte Ankerverstellung oder auch das Nichtverstellen bei einem gewünschten Verstellvorgang. Somit werden Vorteile gegenüber z. B. einer separaten Detektion der Ankerposition ermöglicht; die Detektion der Ankerverstellung bzw. Ankerbewegung ermöglicht eine schnelle Reaktion auf einen möglicherweise sicherheitsrelevanten Fehler, z. B. ein Lösen einer eingelegten Handbremse oder das nicht gewollte Einlegen einer Handbremse bzw. Feststellbremse während der Fahrt, bevor die endgültige Verstellung erreicht ist.

Bei einer Umschaltüberwachung bei eingeschalteter Zündung wird überwacht, ob bei Anlegen des Spannungspulses der Schaltspannung tatsächlich eine Verstellung der Ankerposition erfolgt ist. Somit kann die nicht bestromte Spule zur Sensierung dienen. In der nicht bestromten, sensierenden Schaltspule wird ein negativer Puls durch sowohl den Transformator-Effekt als auch den Generator-Effekt erreicht, die zusammen eine relativ hohe negative Spannung erzeugen können.

Somit ist bereits eine sichere Überprüfung eines ordnungsgemäßen Schaltvorgangs ermöglicht.

Die induzierten Spulenspannungen bzw. Spulenströme können über eine geeignete Funktionsschaltung zur Arbeitspunkteinstellung und/oder Potentialtrennung und/oder Strombegrenzung aufgenommen und an die Auswerteeinrichtung übertragen werden. Da die Fahrzeugelektronik bzw. die Steuereinrichtung und Auswerteeinrichtung der Endstufe bzw. der Magnetventil-Einrichtung allgemein mit einer positiven Bordspannung versorgt wird, kann eine Funktionsschaltung, z. B. eine Spannungsteilerschaltung vorgesehen sein, die dem induzierten negativen Spannungspuls eine positive Vorspannung (Bias-Spannung) überlagert. Somit ist insbesondere bei eingeschalteter Zündung das Erzeugen einer positiven Vorspannung vorteilhaft, so dass der Transient der Überlagerung der Spannungen ausgewertet werden kann.

Falls festgestellt wird, dass trotz eines eingeleiteten Schaltvorgangs, d. h. dem Vorliegen eines Schaltsignals der Steuereinrichtung, keine Ankerverstellung detektiert wird, kann ein Fehlersignal ausgegeben werden und/oder ein längerer Spannungsimpuls auf die aktive, bestromte Schaltspule ausgegeben werden, um den Schaltvorgang nochmals einzuleiten.

Erfindungsgemäß ist eine Überwachung auf ein unbeabsichtigtes Schalten im Ruhemodus, d. h. ohne Ausgabe eines Schaltsignals der Steuereinrichtung, möglich. Diese Überwachung kann bei eingeschalteter Zündung, aber auch bei ausgeschalteter Zündung erfolgen, d. h. sowohl während der Fahrt als auch bei abgestelltem Fahrzeug. Da somit beide Schaltspulen unbestromt sind, können auch beide zur Detektion herangezogen werden.

Bei dieser Überwachung des Ruhemodus bzw. auf unbeabsichtigtes Schalten tritt lediglich der Generator-Effekt auf. Wie in den beiden Schaltspulen induzierten Spannungen sind im Allgemeinen von der Polung bzw. vom Vorzeichen her entgegengesetzt; somit tritt ein negativer Impuls und ein positiver Impuls auf, die wahlweise ausgewertet werden können. Somit kann z. B. direkt der positive Spannungspuls überwacht werden, da das Überlagern einer positiven Vorspannung, die aufgrund z. B. einer Spannungsteilerschaltung jeweils einen zusätzlichen Stromverbrauch verursacht und z. B. die Fahrzeugbatterie bei ausgeschalteter Zündung entladen kann, für eine Auswertung des Positivimpulses nicht erforderlich ist.

Somit wird erkannt, dass die Endstufe bzw. Treiberschaltung für die Schaltspulen zur Überwachung des Ruhemodus auch ausgeschaltet und somit hochohmig sein kann, da der positive Puls eine gewisse Energie enthält, die entsprechend genutzt werden kann, um die Auswerteeinrichtung aufzuwecken, ohne dass eine zusätzliche Energie zur Vorspannung oder andere Einrichtungen erforderlich sind. Somit ist eine Strom verbrauchende stetige Statusüberwachung des Ruhemodus nicht erforderlich, weder bei eingeschalteter noch bei ausgeschalteter Endstufe bzw. Steuereinrichtung. So kann aus dem positiven Spannungspuls direkt ein Aufwecksignal, Aktivierungssignal oder Unterbrechungssignal bzw. ein Eingangssignal für eine Wake-up-Schaltung und/oder Interrupt-Schaltung gebildet werden.

Hierbei können beide Schaltspulen überwacht werden, z. B. indem sie über eine Funktionsschaltung auf separate Eingänge der Auswerteeinrichtung (Mikroprozessor) gegeben werden, so dass ergänzend auch die Richtung der unabsichtlichen Ankerverstellung überwacht werden kann, so dass die mit der Auswerteeinrichtung verbundene Steuereinrichtung sofort reagieren und den Anker wieder zurück in die richtige Stellung verstellen kann. Hierbei wird die Ankerverstellung noch während der Bewegung des Ankers detektiert, so dass die Gegenreaktion sehr schnell eingeleitet werden kann, und in einem Fluidsystem wie z. B. einer elektropneumatischen Handbremse somit der ungewollte Druckanstieg bzw. Druckänderung schnell gestoppt werden kann, bevor eine gefährliche Situation entsteht.

Somit ist die Überwachung des Ruhemodus bzw. das ungewollte Schalten sowohl im eingeschalteten als auch ausgeschalteten Zustand der Zündung möglich, bei geringem Stromverbrauch mit dem Vorteil einer externen Energiezufuhr z. B. für das Aufwecken der Auswerteeinrichtung Steuereinrichtung, wenn die Zündung ausgeschaltet ist.

Die qualitative Auswertung der induzierten Spulenspannung kann z. B. durch Auswertung der Spannungshöhe bzw. des erreichten Spannungspegels, z. B. durch einen Vergleich (Komparator) mit einer Referenzspannung erfolgen. Weiterhin kann auch die Zeitdauer des erzeugten Spannungspulses überprüft werden, um fehlerhafte kurzzeitige Spannungsspitzen, die nicht zu einer Ankerposition gehören, ermitteln zu können; weiterhin gibt die Polarität der Spulenspannungen die Bewegungsrichtung des Ankers an.

Somit kann insbesondere im ausgeschalteten Zustand der Steuer- und Auswerteeinrichtung (Zündung aus, z. B. stromloser Zustand oder Ruhemodus) direkt der positive Puls der beiden Schaltspulen aufgenommen und zum Aufwecken und nachfolgenden Ansteuern herangezogen werden; im eingeschalteten Zustand (Zündung ein) kann vorteilhafterweise eine Auswertung mit Vorspannung erfolgen, da dann eine an einer Spannungsteilerschaltung automatisch eine Vorspannung anliegt, deren Auswertung auf einen negativen Puls vorteilhaft ist.

Ergänzend kann auch die Vorspannung schaltbar ausgelegt werden, so dass sie nur bei Vorliegen eines Schaltsignals eingeschaltet wird. Grundsätzlich kann die Vorspannung auch vom Schaltpuls bzw. Schaltsignal abgezweigt werden.

Zusätzlich zu der Auswertung der unbestromten Schaltspule können ergänzende Sensierwicklungen vorgesehen sein, die direkt einen positiven Puls erzeugen.

Somit wird insbesondere auch ein Verfahren zum Überwachen einer bistabilen Magnetventil-Einrichtung ausgegeben, das eine sichere Überwachung eines ordnungsgemäßen Ruhemodus ermöglicht, mit geringem Hardware-Aufwand und der Möglichkeit eines schnellen Eingriffs bzw. einer schnellen Gegenreaktion.

Die erfindungsgemäße Magnetventil-Einrichtung kann insbesondere mit dem erfindungsgemäßen Verfahren überwacht werden; das erfindungsgemäße Verfahren ist insbesondere zur Überwachung der erfindungsgemäßen Magnetventil-Einrichtung vorgesehen.

Die Auswerteeinrichtung gemäß der Erfindung und die Auswerteeinrichtung gemäß dem Stand der Technik werden im Folgenden anhand der beiliegenden Zeichnungen an einigen Ausführungsformen näher erläutert. Es zeigen:
Fig. 1 eine bistabile Magnetventil-Einrichtung gemäß einer ersten Ausführungsform bei einer Anker-Verstellung durch eine externe Kraft unter Messung des Generator-Effektes;
Fig. 2 die Magnetventil-Einrichtung aus Figur 1 bei Verstellung des Ankers durch einen elektrischen Schaltvorgang mit Spannungs-Rampe;
Fig. 3 ein Beispiel an einer schaltungstechnischen Auswertung des Verstellvorgangs aus Figur 2;
Fig. 4 die Magnetventil-Einrichtung bei elektrischer Ansteuerung entsprechend Figur 2, 3 ohne Verstellung des Ankers;
Fig. 5 die Magnetventil-Einrichtung bei einem Schaltvorgang mit einer Spannungs-Stufe, unter Ausbildung des Generator-Effektes und Transformator-Effektes;
Fig. 6 eine Magnetventil-Einrichtung mit einer Auswertschaltung mit bei einem aktiven Schaltvorgang gemäß einer Ausführungsform;
Fig. 7 eine Magnetventil-Einrichtung mit einer Auswerte-Schaltung gemäß einer weiteren Ausführungsform;
Fig. 8 eine Magnetventil-Einrichtung mit einer Auswerte-Einrichtung gemäß einer weiteren Ausführungsform zur Ermittlung unbeabsichtigter Schaltvorgänge.

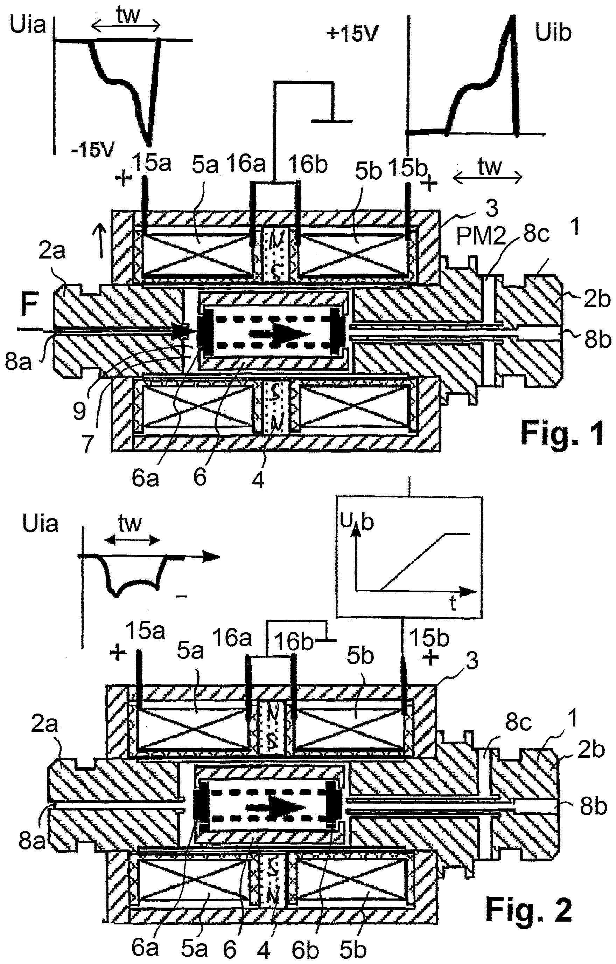

Figur 1 zeigt ein bistabiles Magnetventil 1 (bistabiles Solenoidventil), das als elektropneumatisches 2/2-Ventil mit einem ersten Kern 2a, zweiten Kern 2b, einem Joch 3, einem Permanentmagnet 4, einer ersten Schaltspule 5a sowie einer zweiten Schaltspule 5b, und weiterhin einem in einem Ankerfreiraum 7 verstellbaren Anker 6 (Kern), der zwischen einer ersten Ankerposition I und einer zweiten Ankerposition II verstellbar ist. Das bistabile Magnetventil 1 weist drei pneumatische Anschlüsse auf, d. h. es ist als elektropneumatisches 3/2-Ventil ausgebildet, hier mit einem ersten pneumatischen Anschluss 8a, einem zweiten pneumatischen Anschluss 8b und einem dritten pneumatischen Anschluss 8c, die je nach Ankerposition I oder II miteinander verbunden sind. So sind z. B. in der linken Ankerposition I der Figur 1 die pneumatischen Anschlüsse 8b und 8c über den vom Anker 6 freigegebenen Anker-Freiraum 7 miteinander verbunden und der erste pneumatische Anschluss 8a durch den Anker 6 bzw. die linke Ankerdichtung 6a verschlossen; hingegen wird in der rechten Ankerposition II der zweite pneumatische Anschluss 8b durch die rechte Ankerdichtung 8b verschlossen, die weiterhin in den Anker 6 eingedrückt wird, so dass die pneumatische Anschlüsse 8a und 8c miteinander verbunden sind.

Die Kerne 2a, 2b sowie das Joch 3 und der Anker 6 bzw. dessen zylinderförmige Buchse sind aus ferromagnetisch leitendem Material, insbesondere Eisen ausgebildet; der Permanentmagnet 4 ist dauerhaft magnetisiert und hier als Radial-Magnet, z. B. mit radial innenliegendem Südpol S und radial außenliegendem Nordpol N ausgebildet. Somit ist der Permanentmagnet hier vorzugsweise als Ring bzw. Lochscheibe mit radialer Magnetisierung ausgebildet. Alternativ hierzu können jedoch auch radial angeordnete Axial-Magneten, d. h. mit in axialer Richtung aufeinanderfolgendem Nord- und Südpol eingesetzt werden.

Durch diese magnetische Ausbildung wird ohne Bestromung der Schaltspulen 5a und 5b eine bistabile Magnetausbildung erreicht, bei der Anker 6 in jeder seiner beiden Ankerpositionen I und II gehalten wird: je nach Ankerposition bildet sich in dem in axialer Richtung zwischen den Kernen und 2a und 2b gebildeten Ankerfreiraum 7, der in axialer Richtung größer als der Anker 6 ist, ein Luftspalt 9: in der rechten Ankerposition II ist der Luftspalt 9 somit links ausgebildet, d. h. zwischen dem Anker 6 und dem (linken) ersten Kern 2a; entsprechend ist in der linken Ankerposition I der Luftspalt 9 in der rechten Position, d. h. zwischen dem Anker 6 und dem rechten Kern 2b ausgebildet; an der anderen Seite sind jeweils kein Luftspalt ausgebildet. Der jeweilige Luftspalt 9 schwächt hierbei das linke oder rechte Magnetfeld erheblich, so dass beide Ankerpositionen I und II stabil sind.

Zum Umschalten zwischen den Ankerpositionen I und II sind die beiden Schaltspulen 5a und 5b vorgesehen: bei Bestromen z. B. der linken Schaltspule 5a in der rechten Ankerposition II wird dem ersten (linken) Permanentmagnetfeld PM1 ein erstes (linkes) Elektromagnetfeld EM1 überlagert derartig, dass die Überlagerung der Magnetfelder PM1 und EM1 stärker ist als das haltende Permanentmagnetfeld PM2, so dass der Anker 6 aufgrund der größeren magnetischen Kraft verstellt wird in die linke Ankerposition I, und umgekehrt bei der Verstellung von links nach rechts durch Bestromung der (rechten) zweiten Schaltspule 5b. Die jeweils andere, passive Schaltspule 5a, 5b ist nicht bestromt.

Bei der in Figur 1 gezeigten Ausbildung sind die Schaltspulen 5a und 5b somit jeweils durch einen positiven Spulenanschluss 15a, b und einen Masse gelegt negativen Spulenanschluss 16a, b bestromt.

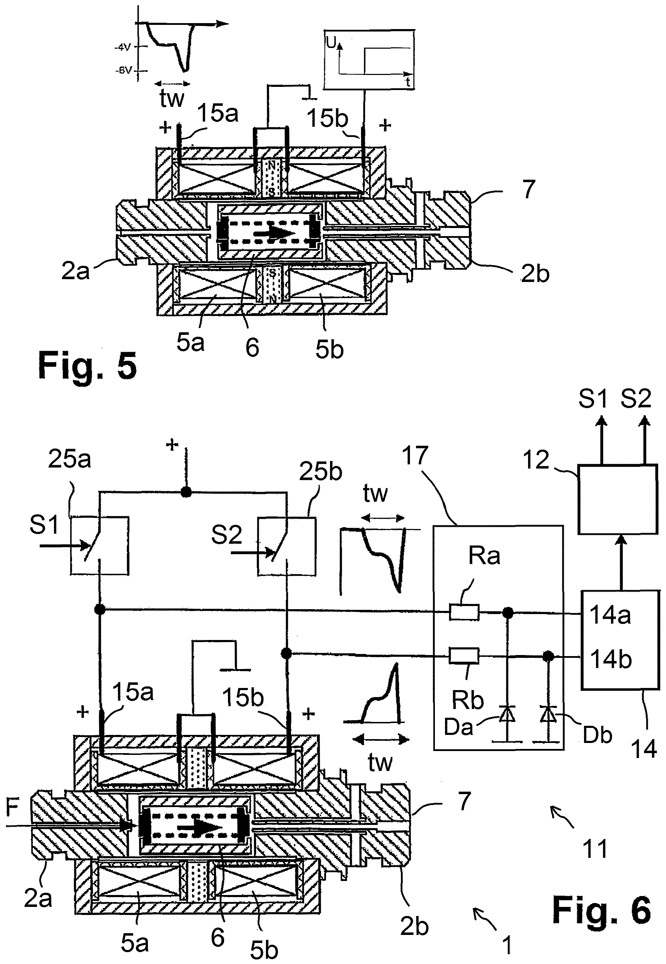

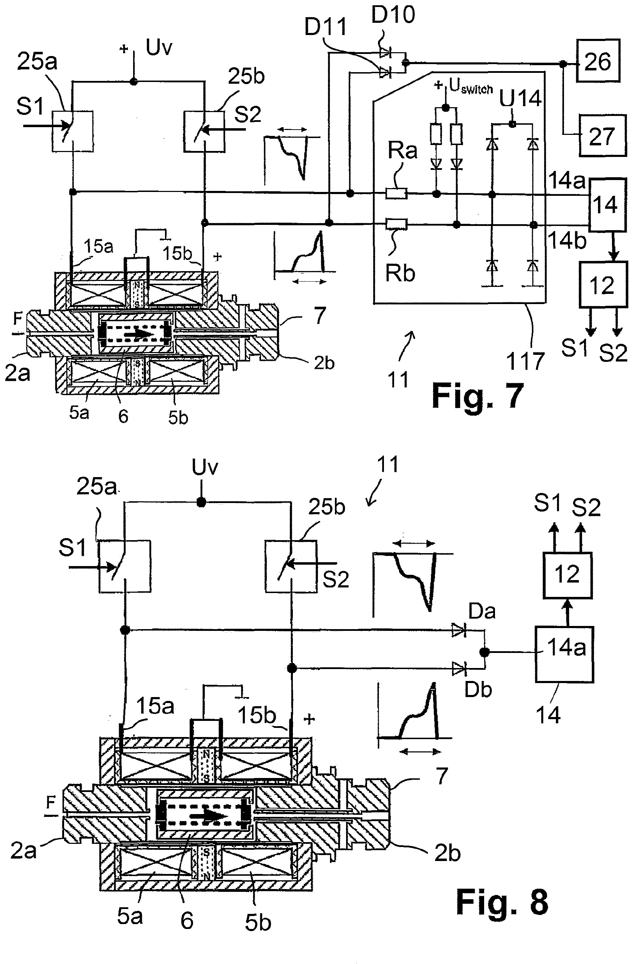

Das bistabile Magnetventil 1 ist in einer bistabilen Magnetventil-Einrichtung 10 aufgenommen, die zusätzlich zu dem bistabilen Magnetventil 1 eine Endstufe 11 aufweist, in der eine Steuereinrichtung 12 sowie eine Auswerteeinrichtung 14 vorgesehen sind, die auch kombiniert ausgebildet sein können; gemäß unterschiedlichen Ausbildungen können hierbei Funktionsschaltungen, z. B. Widerstände R1, R2, weiterhin auch eine Funktionsschaltung 17 nach Fig. 6 oder eine Funktionsschaltung 117 nach Fig. 7, zur Einstellung eines Arbeitspunktes, einer Potentialtrennung und/oder einer Strombegrenzung vorgesehen sein. Die Funktionsschaltungen 17, 117 der Fig. 6 und 7 sind vorgesehen, um negative Spannungen, die zu einer Zerstörung von Bauelementen führen können, zu unterdrücken.

Die bistabile Magnetventil-Einrichtung 10 kann insbesondere in einem elektropneumatischen Feststellbremssystem, d. h. als Schaltventil einer elektropneumatischen Feststellbremse ausgebildet sein, die auch ohne Bestromung sicher in der jeweiligen Stellung, d.h. Feststellbremse eingelegt oder nicht eingelegt, entsprechend den Ankerpositionen I und II gehalten wird.

Zum Umschalten werden mittels einer Steuereinrichtung 12, z. B. über Schaltsignale S1, S2, jeweils kurze elektrische Pulse auf die positiven Spulenanschlüsse 15a oder 15b eingegeben; dies kann nach Fig. 2 über eine Rampe, d.h. langsam ansteigender Spulenspannung, oder mittels eines Rechteckpulses nach Fig. 5 erfolgen. Die Rampe kann insbesondere vorgesehen sein, um die zeitliche Änderung des Stromes (zeitliche Ableitung di/dt) gering zu halten, so dass der Transformator-Effekt gering gehalten wird.

Die Auswerteeinrichtung 14 dient dazu, das elektrische Verhalten der nicht bestromten Schaltspule 5a bzw. 5b zu überwachen und aus der Überwachung auf ein Schaltverhalten, d.h. eine Ankerbewegung des Ankers 6 zu schließen. Hierbei wird vorteilhafterweise jeweils mindestens eine induzierte Spulenspannung oder ein induzierter Spulenstrom, d. h. die in der (linken) ersten Schaltspule 5a induzierte erste Spulenspannung UIa oder die in der (rechten) zweiten Schaltspule 5b induzierte erste Spulenspannung UIb gemessen. Diese Überwachung wird wie nachfolgend mit Bezug zu den Figuren beschrieben in einem Ruhemodus (Ruhezustand) bzw. nicht bestromten Zustand erfolgen:
Im nicht bestromten Ruhemodus ist es Aufgabe des bistabilen Magnetventils 1, die jeweilige Ankerposition I oder II zu halten. Durch eine externe Kraft, z. B. einen mechanischen Schock, kann jedoch der Anker 6 als mechanisch verstellbares Teil in dem Ankerfreiraum 7 verstellt werden, z. B. bei starken Rütteln bzw. einem Schlag aufgrund von unebener Fahrbahn oder aufgrund im Fahrzeug selbst erzeugter Vibration. Auch können die anliegenden pneumatischen Drücke, die durch den Anker 6 gesteuert werden, selbst derartige Verstellungen unterstützen, da sie in dem Ankerfreiraum 7 auf den Anker 6 einwirken.

Die Induktion einer Spulenspannung Uia oder Uib erfolgt aufgrund einer oder beider der folgenden physikalischen Effekte:
Generator-Effekt: der sich bewegende Anker 6 ist durch die PermanentMagnetfelder PM1 und PM2 magnetisiert, so dass der sich zwischen den Ankerpositionen I und II bewegende Anker in den Schaltspulen 5a und 5b jeweils einen Strom induziert; der Anker 6 stellt somit für sich einen (Permanent-)Magnet dar, der aufgrund seiner Bewegung einen Generator-Effekt in den umgebenden Spulen 5a und 5b hervorruft. Dies ist in Figur 1 gezeigt: der sich z. B. von der linken Ankerposition I in die rechte Ankerposition II bewegende Anker 6 induziert in der ersten Schaltspule 5a die erste Spulenspannung Ula als Spannungspeak, entsprechend in der rechten Schaltspule 5b die zweite Spulenspannung Uib. Entsprechend den Anschlüssen bzw. der Polung sind Uia und Uib zueinander vom Vorzeichen her versetzt, da die Schaltspulen 5a und 5b revers zueinander angeschlossen sind. Es können sich hierbei Generator-Spannungen Uia und Uib von -15 Volt bzw. +15 Volt, wie in Figur 1 dargestellt, ausbilden, die im Allgemeinen den gezeigten charakteristischen Verlauf mit einem ersten Anstieg, einem Sattel bzw. Zwischenplateau und dem nachfolgenden Spannungspeak bei z. B. +/- 15 Volt aufweisen können. Die Zeitdauer tw kann z. B. 3ms betragen.

Die Steuereinrichtung 12, z. B. wie die Handbremsen-Steuereinrichtung, kann somit die erste Schaltspule 5a und die zweite Schaltspule 5b jeweils über deren positiven Spulenanschluss 15a und 15b bestromen, z. B. gemäß Figur 6über Schalter 25a, 25b zur Ausbildung einer Rechteckspannung, oder mittels einer Rampe. Die Steuereinrichtung 12 kann mit der Auswerteeinrichtung 14 kombiniert als Steuer- und Auswerteeinrichtung ausgebildet sein; alternativ hierzu können die Auswerteeinrichtung 14 und Steuereinrichtung 12 Signale austauschen.

Somit erfolgt gemäß Figur 1 im Ruhemodus eine Überwachung auf ein unbeabsichtigtes Schalten zwischen den Ankerpositionen I und II, wobei diese Überwachung während eingeschalteter Zündung und auch ausgeschaltete Zündung erfolgen kann.

Bei der Überwachung bei ausgeschalter Zündung kann die durch den Generator-Effekt erzeugte induzierte Spulenspannung Uia, Uib als externe Energiezufuhr eingesetzt werden und die nicht aktive, z. B. in einen Sleep-Modus geschaltete oder auch ganz ausgeschaltete Steuereinrichtung 12 und/oder nicht aktive Auswerteeinrichtung 14 aufwecken.
Hierzu wird ein wake-up Signal zum Aufwecken bzw. Einschalten der Steuereinrichtung 12 und/oder Auswerteeinrichtung 14 ausgebildet.

Gemäß Figur 1 können grundsätzlich der negative und/oder der positive, aufgrund des Generator-Effektes erzeugte Spannungspuls der ersten und/oder zweiten Spulenspannung Uia, Uib genutzt werden. In Figur 1 beispielhaft Uia negativ. Hierbei ist die Ausnutzung des positiven Spannungspuls, hier somit Uib, vorteilhaft, da die Erzeugung einer positiven Vorspannung einen gewissen Stromverbrauch verursacht, und dadurch die Fahrzeugbatterie entlädt, wenn die Zündung ausgeschaltet ist.

Somit kann die aktive Schaltspule überwacht werden, da die zugehörige Endstufe ausgeschaltet und somit inaktiv ist. Der Generator-Spannungspuls der zweiten Spulenspannung Uib ist positiv und enthält die erforderliche Energie, um als wake-up-Signal die Steuereinrichtung 12 aufzuwecken, z. B. zum Einschalten eines Schalters (z. B. Transistor), der die Energieversorgung der ECU von einer dauerhaften Spannungsklemme (Klemme 30) abschaltet, oder als Eingangssignal eines Wake-Up- Eingangs.

Gemäß Fig. 6 und 7 können die beiden induzierten Spulenspannungen Uia und Uib der beiden Schaltspulen 5a und 5b auf separate Eingänge, d. h. ein ersten Messeingang 14a und einen zweiten Messeingang 14b der Auswerteeinrichtung 14 eingegeben werden. Hierdurch kann ausgewertet werden, in welche Richtung der Anker 6 unabsichtlich bewegt wurde, so dass die Steuereinrichtung 12 sofort derartig reagieren kann, das sie in den Anker 6 wieder zurück in die vorherige Ankerposition I oder II verstellt, d.h. ein Rückstellsignal ausgibt. Diese Gegenreaktion kann sehr schnell eingeleitet werden, so dass der ungewollte Druckanstieg durch Umschalten des bistabilen Magnetventils 1 gestoppt werden kann, bevor eine gefährliche Situation einsteht, also bevor die Handbremse gelöst wird oder bevor während der Fahrt die Handbremse eingelegt wird.

Zum Umschalten gibt somit die Steuereinrichtung 12 Schaltsignale S1 oder S2 an Schalteinrichtungen 25a, 25b, z. B. MOSFETs, die die positiven Spulenanschlüsse 15a, 15b mit der positiven Versorgungsspannung verbinden.

Gemäß der Ausführungsform der Figur 6 erfolgt die Spannungsmessung hochohmig durch zwischen die positiven Spulenanschlüsse 15a, 15b sowie die Messeingänge 12a und 12b geschalteten Mess-Widerstände Ra und Rb, die zur Entkopplung der Spannungspegel dienen. Hierbei sind Dioden Da, Db, vorzugsweise als Zenerdioden, zur Vermeidung schädlicher hoher positiver Spannungspulse vorgesehen und zur Vermeidung schädlicher negativer Spannungspulse.

Weiterhin ist eine Überwachung der bistabilen Magnetventil-Einrichtung 10 auf ordnungsgemäße Schaltvorgänge, d. h. ein ordnungsgemäßes Umschalten zwischen den Ankerpositionen I und II möglich, d. h. eine Umschaltüberwachung bei eingeschalteter Zündung:
Durch ein Schaltsignal S1 oder S2 wird gemäß Fig. 6, 7, 8 eine Schaltspule 5a oder 5b bestromt, um den Anker in die jeweils andere Ankerposition II oder I zu bewegen. Die Messung erfolgt hierbei an der nicht bestromten Schaltspule, die somit als Sensorspule dient, ob beim Anlegen des Spannungspulses tatsächlich ein Schaltvorgang erfolgte:
Bei derartigen Schaltvorgängen tritt an der nicht bestromten Schaltspule (Sensorspule), z. B. Schaltspule 5a, ein negativer Spannungspuls Uia auf, der durch zwei physikalische Effekte induziert wird:
Zum einen wie bei der oben beschriebenen Ausführungsform tritt der Generator-Effekt durch den sich bewegenden Anker 6 auf. Durch die anliegenden Permanentmagnetfelder PM1 und PM2 ist der Anker 6 selbst magnetisiert bzw. Teil der Permanentmagnetfelder, so dass der sich bewegende Anker 6 als Generator in den statischen Schaltspulen, somit auch in der passiven Schaltspule 5b wirkt.

Weiterhin tritt als zweiter physikalischer Effekt der Transformator-Effekt auf, wonach die Anordnung der beiden Schaltspulen 5a und 5b einen Transformator ausbilden, der eine Umsetzung von sich zeitlich ändernden Spulenströmen über einen sich zeitlich ändernden magnetischen Fluss wiederum in Spulenspannungen bewirkt. Das Bestromen der zweiten Schaltspule 5b führt zur Ausbildung eines Magnetflusses des zweiten Elektromagnetfeldes EM2, dessen zeitliche Änderung wiederum in der passiven ersten Schaltspule 5a zur Induktion eines Spannungspulses führt. Hierbei verläuft der magnetische Fluss des Elektromagnetfeldes z. B. auch teilweise über den sich bewegenden Anker 6, so dass die Effekte sich überlagern, weiterhin auch z. B. über das gesamte Joch 3 das beide Spulen umgibt, so dass die Bestromung an einer der beiden Schaltspulen 5a, 5b durch die Ausbildung eines Elektromagnetfeldes über das gemeinsame Joch 3 sowie die Kerne 2a, 2b sowie den Anker 6 immer auch eine Induktion in der passiven Schaltspule ausbildet.

Durch die beschriebene Rampenansteuerung, d.h. mit kleinem di/dt bzw. kleiner zeitlicher Stromänderung, kann der - für die funktionelle Wirkung des Ventils grundsätzlich unerwünschte - Transformatoreffekt weitgehend unterdrückt werden.

Dieses ist in Fig. 2 dargestellt. Falls der Anker 6 klemmen sollte, entfällt der Generator-Effekt und durch das geringe di/dt, d.h. die geringe zeitliche Änderung des Stroms, wird nur eine vernachlässigbar kleine Spannung induziert.

Eine derartige Ermittlung eines ordnungsgemäßen Schaltvorgangs durch Diskriminierung mittels eines Vergleichs-Spannungspegels stellt hierbei die einfachste Überprüfungsmöglichkeit dar; grundsätzlich kann auch die Form des Spannungspulses überprüft werden, was jedoch aufwendiger sein kann, da im Allgemein die Auswerteeinheit 14 - wie in der KFZ-Technik üblich - vorteilhafterweise positive Spannungen detektiert bzw. nicht zur Auswertung negativer Spannungspulse vorgesehen ist. Um dennoch negative Spannungspulse auszuwerten, kann über eine geeignete Funktionsschaltung 17 dem an der sensierenden Schaltspule 5a ausgebildeten negativen Puls eine positive Vorspannung Ubias überlagert (addiert) werden, so dass der Auswerteeinrichtung 14 ein Spannungspuls als Differenz bzw. Verringerung der positiven Vorspannung zugeführt wird.

Falls keine Ankerbewegung detektiert wird, kann die Steuereinrichtung 12 auf unterschiedliche Weise reagieren, z. B. erneut einen längeren Spannungspuls als Schaltsignal S2 auf die zweite Schalteinrichtung 25b ausgeben, um erneut eine Verstellung des Ankers in diese Richtung zu bewirken, und/oder eine Fehlermeldung ausgeben.

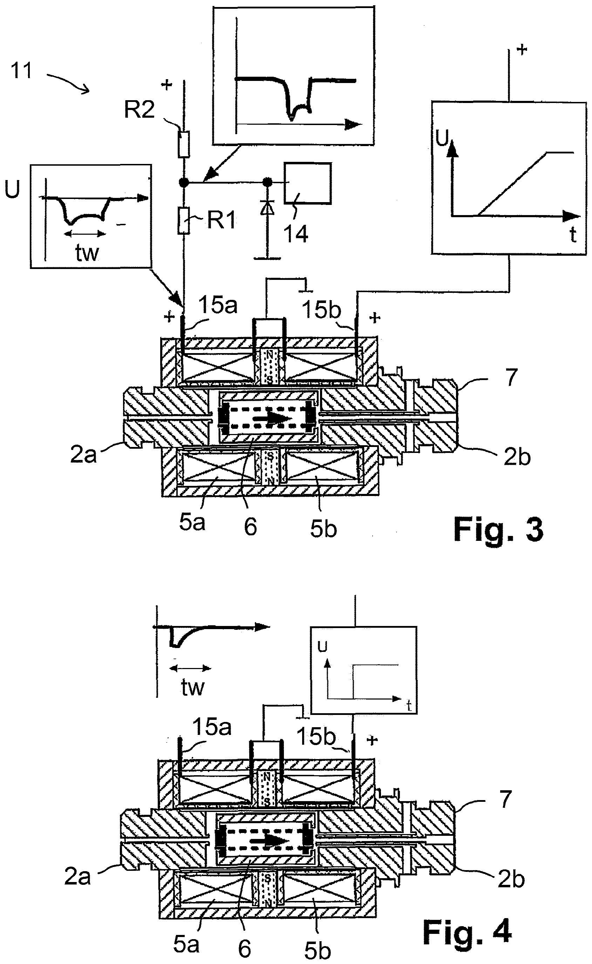

Figur 3 zeigt eine Ausführungsform einer Überwachung eines Schaltvorgangs in die zweite Ankerposition 2, d. h. mit aktiver zweiter Schaltspule 5b und sensierender erster Schaltspule 5a, bei der wiederum die in Figur 2 gezeigte Rampe als Spulenstrom eingegeben wird und die an dem ersten positiven Spulenanschluss 15a entnommene Spulenspannung Uia über eine Funktionsschaltung abgenommen wird, die eine Spannungsteilerschaltung mit den Widerständen R1, R2 gegenüber der Versorgungsspannung UV aufweist, so dass zwischen den Spannungsteiler-Widerständen R1 und R2 die durch die Spannungsteilerschaltung erzeugte positive Vorspannung aufgegeben wird, da die erste Schaltspule 5a stromlos ist und somit niederohmig auf Masse liegt. Somit wird die Vorspannung Ubias erzeugt, von der der erzeugte Spannungspuls entsprechend negativ abgezogen ist; die Auswerteeinrichtung 14 kann dieses erzeugte zweite (nachfolgende) Messsignal entsprechend auswerten, wobei hier wiederum eine Diode D1 als Schutz gegen zu hohe Spannungswerte vorgesehen ist und bei zu hohem Spannungswert durchschaltet.

Gemäß Figur 4 erfolgt ein nicht ordnungsgemäßer Schaltvorgang, bei dem somit nur der Transformator-Effekt auftritt, da der Anker 6 sich nicht bewegt, da er z. B. bereits in der zweiten Ankerposition II ist und kann somit nicht mehr verstellt werden. Hier wird somit abzüglich von Ubias nur eine Peakspannung von Uib = -2,5 V erzeugt.

Es zeigt sich, dass die Kurven der Figur 4 und Figur 5 anfangs zunächst gleich oder ähnlich sind, da hier zunächst der Transformator-Effekt eingeleitet wird; der Generator-Effekt tritt dann bei den sich zeitlich bewegenden Ankern nur in dem zweiten Fall der Figur 5 auf, so dass hier der Peak stärker (d. h. v größer) wird, wobei wie oben beschrieben sich der eigentliche Generator-Effekt mit einem weiteren Transformator-Effekt überlagern kann.

Gemäß Figur 6 können somit beide Spulenanschlüsse 15a der beiden Schaltspulen 5a und 5b mit einem Messeingang 14a, 14b der Auswerteeinrichtung 14 verbunden sein, mit geeigneter Funktionsschaltung, z. B. den Dioden Da, Db.

Figur 7 zeigt eine beispielhafte Ausführungsform, um beide Spannungspulse auszuwerten. Gemäß Figur 7 werden somit beide Schaltspannungen 5a und 5b auf induzierte Spannungen ausgewertet, um beide oben beschriebene Überwachungen, d.h. die Überwachung auf unbeabsichtigtes Schalten des Ruhemodus und die Überwachung auf ordnungsgemäße Schaltvorgänge durchführen zu können. Hierbei ist eine wake up-Vorrichtung 26 vorgesehen, die den aus den beiden induzierten Spulenspannungen Uia und Uib über die Dioden D10, D11 ausgefilterten positiven Puls aufnimmt, weiterhin ist eine IRQ-Einrichtung 27 zur Erzeugung eines Interrupt-Requestes IRQ vorgesehen, wobei diese IRQ-Einrichtung 27 als Eingang an einem Mikroprozessor ausgebildet sein kann.

Die beiden induzierten Spannungen Uia, Uib werden weiterhin wie bereits mit Bezug zu Figur 6 beschrieben den Messeingängen 14a, 14b der Auswerteeinrichtung 14 zugeführt, gemäß der Ausführungsform der Figur 7 über Schutzdioden gegenüber Masse und gegenüber der positiven Versorgungsspannung Uv. Bei geeigneter Dimensionierung der Schutzwiderstände Ra, Rb (Messwiderstände) können diese Dioden ggf. auch entfallen. Die positive Vorspannung wird über Widerstände und Dioden zugeführt.

Gemäß Figur 8 werden beide positiven Spulenanschlüsse 15a, 15b über Schutzdioden Da und Db einem gemeinsamen Messeingang 14a der Auswerteeinrichtung 14 zugeführt, die somit jeweils nur einen positiven Impuls messen kann, somit kann hier nur der Generator-Effekt, d. h. das unbeabsichtigte Schalten gemäß Figur 1 ermittelt werden.

### Bezugszeichenliste (Teil der Beschreibung)

- 1: bistabiles Magnetventil, z. B. pneumatisches 3/2-Magnetventil
- 2a: erster Kern
- 2b: zweiter Kern
- 3: Joch
- 4: Permanentmagnet
- 5a: erste Schaltspule
- 5b: zweite Schaltspule
- 6: Anker
- 6a: erste Ankerdichtung
- 6b: zweite Ankerdichtung
- 7: Ankerfreiraum
- 8a: erster pneumatischer Anschluss
- 8b: zweiter pneumatischer Anschluss
- 8c: dritter pneumatischer Anschluss
- 9: Luftspalt
- 10: bistabile Magnetventil-Einrichtung
- 11: Endstufe der Magnetventil-Einrichtung 10
- 12: Steuereinrichtung

- 14: Auswerteeinrichtung
- 14a: erster Messeingang
- 14b: zweiter Messeingang

- 15a: erster positiver Spulenanschluss der ersten Schaltspule 5a
- 15b: zweiter positiver Spulenanschluss der zweiten Schaltspule 5b
- 16a: Masseanschluss der ersten Schaltspule 5a
- 16b: Masseanschluss der zweiten Schaltspule 5b
- 17, 117: Funktionsschaltung zwischen Spulenanschlüssen und Auswerteeeinrichtung 14
- 25a: erste Schaltereinrichtung
- 25b: zweite Schaltereinrichtung
- 26: Wake-up-Vorrichtung
- 27: IRQ-Einrichtung

- I, II: erste Ankerposition, zweite Ankerposition
- S1: erstes Schaltsignal
- S2: zweites Schaltsignal
- Ra: erster Messwiderstand
- Rb: zweiter Messwiderstand
- Da, Db: Dioden
- D10, D11: Dioden vor wake up-Vorrichtung 26 tw Zeitdauer der induzierten Spulenspannung Uia, Uib Uia, Uib erste, zweite induzierte Spulenspannung

## Patentansprüche

1. Bistabile Magnetventil-Einrichtung (10) für ein Fluid-System, insbesondere Druckluft-System, wobei die bistabile Magnetventil-Einrichtung (10) ein bistabiles Magnetventil (1) aufweist mit:
einem Permanentmagnet (4),
einem zwischen einer ersten Ankerposition (I) und zweiten Ankerposition (II) verstellbaren Anker (6),
einer ersten Schaltspule (5a) zur Bestromung für eine Verstellung des Ankers (6) in die erste Ankerposition (I) sowie einer zweiten Schaltspule (5b) zur Bestromung für eine Verstellung des Ankers (6) in die zweite Ankerposition (II),
wobei
eine Auswerteeinrichtung (14) zur Messung einer induzierten Spulenspannung (Uia, Uib) und/oder eines induzierten Spulenstromes an mindestens einer nicht bestromten Schaltspule (5a, 5b) und zur Bewertung eines Schaltverhaltens des Ankers (6) vorgesehen ist, **dadurch gekennzeichnet, dass** die Auswerteinrichtung (14) derart konfiguriert ist um in einem Ruhemodus ohne Schaltvorgang des Ankers (6) induzierte Spannungen (Uia, Uib) und/oder induzierte Ströme beider unbestromten Schaltspulen (5a, 5b) zu messen.

2. Magnetventil-Einrichtung (10) nach Anspruch 1, **dadurch gekennzeichnet, dass**
das bistabile Magnetventil (1) einen ersten Kern (2a), einen zweiten Kern (2b) und einen Anker (6) aus magnetisch leitendem Material aufweist, wobei der Anker (6) in der ersten Ankerposition (I) an dem ersten Kern (2a) anliegt unter Ausbildung eines Luftspalts (9) zu dem zweiten Kern (2b) und in der zweiten Ankerposition (II) an dem zweiten Kern (2b) anliegt unter Ausbildung eines Luftspalts (9) zu dem ersten Kern (2a).

3. Magnetventil-Einrichtung (10) nach Anspruch 1 oder 2,
**dadurch gekennzeichnet, dass**
die Auswerteeinrichtung (14) mit mindestens einem Spulenanschluss der Schaltspulen (5a, 5b) (15a, 15b) verbunden ist und die Auswerteinrichtung (14) derart konfiguriert ist, um in der mindestens einen nicht bestromten Schaltspule (5a, 5b) induzierte Spulenspannung (Uia, Uib) direkt oder über eine Funktionsschaltung (17) zur Einstellung eines Arbeitspunktes oder Begrenzung einer Spannung und/oder eines Stroms aufzunehmen und auszuwerten.

4. Magnetventil-Einrichtung (10) nach Anspruch 1 oder 2,
**dadurch gekennzeichnet, dass**
die Auswerteeinrichtung (14) derart konfiguriert ist, um eine Bewegungsrichtung oder Schaltrichtung des Ankers (6) aus einer Polarität der induzierten Spulenspannung (Uia, Uib) und/oder des induzierten Spulenstromes zu ermitteln.

5. Magnetventil-Einrichtung (10) nach einem der vorherigen Ansprüche, **dadurch gekennzeichnet, dass**
die Auswerteeinrichtung (14) derart konfiguriert ist, um eine Zeitdauer (tw) und/oder Höhe der induzierten Spulenspannung (Uia, Uib) zu ermitteln, z. B. durch Vergleich mit einer Referenz-Spannung, und aus der Ermittlung das Schaltverhalten bewertet.

6. Magnetventil-Einrichtung (10) nach Anspruch 1,
**dadurch gekennzeichnet, dass**
die bei einer ungewollten Ankerbewegung induzierte Spulenspannung (Uia, Uib) derart konfiguriert ist, um von einer Aktivierungseinrichtung (26, 27), z. B. Wake-up- Einrichtung (26) oder Interrupt-Einrichtung (27) aufgenommen zu werden, die ein Aufwecksignal und/oder Fehlersignal und/oder Unterbrechungssignal ausgibt.

7. Magnetventil-Einrichtung (10) nach Anspruch 6,
**dadurch gekennzeichnet, dass**
die Funktionseinrichtung (26) derart konfiguriert ist, um aus der induzierten Spulenspannung (Uia, Uib) ohne zusätzliche Energieversorgung ein Aktivierungssignal oder Unterbrechungssignal auszubilden zum Einschalten und/oder Aktivieren der sich in einem inaktiven Zustand befindenden Auswerteeinrichtung (14) und/oder einer mit der Auswerteeinrichtung in Datenverbindung stehenen Steuereinrichtung (12) zum Schalten der Schaltspulen (5a, 5b).

8. Magnetventil-Einrichtung (10) nach einem der vorherigen Ansprüche, **dadurch gekennzeichnet, dass**
die Auswerteeinrichtung (14) derart konfiguriert ist, um bei einem durch ein Steuersignal oder Schaltsignal (S1, S2) angesteuerten Schaltvorgang des Ankers (6) die induzierte Spulenspannung (Uia, Uib) und/oder den induzierten Spulenstrom an der nicht bestromten Schaltspule (5a, 5b) zu messen und zu bewerten.

9. Magnetventil-Einrichtung (10) nach Anspruch 8,
**dadurch gekennzeichnet, dass**
die Auswerteeinrichtung (14) derart konfiguriert ist, dass bei Ermitteln eines nicht ordnungsgemäßen Schaltvorgangs ein Fehlersignal an eine das Schaltsignal (S1, S2) ausgebende Steuereinrichtung (12) ausgegeben wird zur Wiederholung des Schaltvorganges, und/oder bei ungewolltem Schalten ein Rückstellsignal ausgegeben wird.

10. Magnetventil-Einrichtung (10) nach einem der vorherigen Ansprüche, **dadurch gekennzeichnet, dass**
die Magentventil-Einrichtung (10) derart konfiguriert ist, dass einer negativen induzierten Spulenspannung (Uia, Uib) bei eingeschalteter Zündung eines Fahrzeugs, in dem die Magnet-Ventileinrichtung (10) verbaut ist, eine positive Vorspannung (Ubias) zur Erzeugung eines positiven Ausgangs-Signals überlagert ist.

11. Magnetventil-Einrichtung (10) nach einem der vorherigen Ansprüche, **dadurch gekennzeichnet, dass**
in einem ausgeschalteten Zustand der Steuereinrichtung (12) und/oder bei ausgeschalteter Zündung eines Fahrzeugs, in dem die Magnet-Ventileinrichtung (10) verbaut ist, und die Magentventil-Einrichtung (10) derart konfiguriert ist, um
die Schaltspulen (5a) und (5b) und/oder die induzierte Spulenspannung (Uia, Uib) auf einen positiven Spannungspuls zu überwachen
und
in einem eingeschalteten Zustand der Steuereinrichtung (12) und/oder bei eingeschalteter Zündung durch eine Funktionseinrichtung (26) eine positive Vorspannung (Ubias) auf die induzierte Spulenspannung (Uia, Uib) zu überlagern.

12. Magnetventil-Einrichtung (10) nach Anspruch 10 oder 11,
**dadurch gekennzeichnet, dass** die Magentventil-Einrichtung (10) derart konfiguriert ist, dass
die Vorspannung (Ubias) schaltbar ist und nur bei Ausgabe eines Schaltsignals (S1, S2) zum Umschalten der Ankerposition eingeschaltet ist.

13. Magnetventil-Einrichtung (10) nach einem der vorherigen Ansprüche, **dadurch gekennzeichnet, dass**
an den Schaltspulen (5a, 5b) Sensier-Wicklungen vorgesehen sind zur Ausbildung der induzierten Spulenspannungen (Uia, Uib).

14. Magnetventil-Einrichtung (10) nach einem der vorherigen Ansprüche, **dadurch gekennzeichnet, dass**
die Schaltspulen (5a, 5b) in einem gemeinsamen Joch (3) ausgebildet sind und mit dem ersten Kern (2a) und dem Anker (6) sowie dem Permanentmagnet (4) einen ersten Eisenkreis, und mit dem zweiten Kern (2b), dem Anker (6) und dem Permanentmagneten (4) einen zweiten Eisenkreis ausbilden,
wobei in den Ankerpositionen (I, II) unterschiedliche Fluid-Anschlüsse (8a, 8b, 8c) miteinander geschaltet oder verbunden sind.

15. Verfahren zum Überwachen einer bistabilen Magnetventil-Einrichtung (10) nach Anspruch 1, die einen Anker (6), eine erste Schaltspule (5a) und eine zweite Schaltspule (5b) zum Schalten des Ankers (6) in eine erste Ankerposition (I) oder zweite Ankerposition (II) aufweist,
wobei durch Ansteuerung einer Steuereinrichtung (12) für einen ersten Schaltvorgang in die erste Ankerposition (I) ein erstes Schaltsignal (S1) ausgegeben wird und die zweite Schaltspule (5b) stromlos ist und
für einen zweiten Schaltvorgang in die zweite Ankerposition (II) ein zweites Schaltsignal (S2) zum Bestromen einer zweiten Schaltspule (5b) ausgegeben wird und die erste Schaltspule (5a) stromlos ist,
wobei in einem Ruhemodus beide Schaltspulen (5a, 5b) unbestromt sind,
wobei im Ruhemodus beide unbestromte Schaltspulen (5a, 5b) auf einen induzierten Spulenstrom oder induzierte Spulenspannung (Uia, Uib) überwacht werden und aus der Überwachung ermittelt wird, ob ein Schaltvorgang vorliegt.

16. Elektropneumatische Feststellbremse, die eine bistabile Magnetventil-Einrichtung nach einem der Ansprüche 1 bis 14 aufweist,
wobei die bistabile Magnetventil-Einrichtung drei pneumatische Anschlüsse (8a, 8b, 8c) aufweist und zwischen einer Entlüftungsstellung zum Entlüften der Parkbremse und einer Belüftungsstellung zum Belüften der Parkbremse verstellbar ist.

## Claims

1. Bistable solenoid valve device (10) for a fluid system, in particular compressed air system, wherein the bistable solenoid valve device (10) has a bistable solenoid valve (1) with:
a permanent magnet (4),
an adjustable armature (6) between a first armature position (I) and a second armature position (II),
a first switching coil (5a) for energizing the adjustment of the armature (6) in the first armature position (I) as well as a second switching coil (5b) for energizing the adjustment of the armature (6) in the second armature position (II),
wherein
an evaluation device (14) for measuring an induced coil voltage (Uia, Uib) and/or induced coil current in at least one unenergized switching coil (5a, 5b) and for evaluating the switching behavior of the armatures (6) is provided, **characterized in that** the evaluation device (14) is configured in such a way to measure in a sleep mode without switching operation of the armature (6) induced voltages (Uia, Uib) and/or induced currents of the two unenergized switching coils (5a, 5b) .

2. Solenoid valve device (10) according to Claim 1, **characterized in that**
the bistable solenoid valve (1) has a first core (2a), a second core (2b) and an armature (6) made of magnetically conducting material, wherein the armature (6) bears against the first core (2a) in the first armature position (I) by forming an air gap (9) with respect to the second core (2b) and against the second core (2b) in the second armature position (II) by forming an air gap (9) with respect to the first core (2a).

3. Solenoid valve device (10) according to Claim 1 or 2, **characterized in that**
the evaluation device (14) is connected with at least one coil connection of the switching coils (5a, 5b) (15a, 15b) and the evaluation device (14) is configured in such a way to record and evaluate the coil voltage (Uia, Uib) induced in at least one unenergized switching coil (5a, 5b) directly or through a functional circuit (17) for setting up an operating point or limiting a voltage and/or a current.

4. Solenoid valve device (10) according to Claim 1 or 2, **characterized in that**
the evaluation device (14) is configured in such a way to determine a movement direction or switching direction of the armatures (6) from a polarity of the induced coil voltage (Uia, Uib) and/or the induced coil current.

5. Solenoid valve device (10) according to one of the preceding claims,
**characterized in that**
the evaluation device (14) is configured in such a way to determine a time period (tw) and/or a level of the induced coil voltage (Uia, Uib), e.g. by comparing with a reference voltage, and to evaluate the switching behavior from the determination.

6. Solenoid valve device (10) according to Claim 1, **characterized in that**
the coil voltage (Uia, Uib) induced by unintended movement of the armature is configured in such a way that it is received by an activation device (26, 27), e.g. a wake-up device (26) or an interrupt-device (27), which generates a wake-up signal and/or an error signal and/or an interruption signal.

7. Solenoid valve device (10) according to Claim 6, **characterized in that**
the functional device (26) is configured in such a way that from the induced coil voltage (Uia, Uib), without additional energy supply, an activation signal or interruption signal is generated for switching on and/or activating the evaluation device (14) being in inactive state and/or a control device (12) being in data connection with the evaluation device, for switching the switching coils (5a, 5b).

8. Solenoid valve device (10) according to one of the preceding claims,
**characterized in that**
the evaluation device (14) is configured in such a way that at a switching process of the armature (6), driven by a control signal or switching signal (S1, S2), to measure and evaluate the induced coil voltage (Uia, Uib) and/or the induced coil current in the unenergized switching coil (5a, 5b).

9. Solenoid valve device (10) according to Claim 8, **characterized in that**
the evaluation device (14) is configured in such a way that, when an incorrect switching process is detected, an error signal is sent to the control device (12), which generates the switching signal (S1, S2), for repeating the switching process and/or in the case of unintentionally switching a reset signal is generated.

10. Solenoid valve device (10) according to one of the preceding claims,
**characterized in that**
the solenoid valve device (10) is configured in such a way that the negative induced coil voltage (Uia, Uib) generated during switched-on ignition of a vehicle, in which the solenoid valve device (10) is mounted, a positive bias voltage (Ubias) is superimposed for the generation of a positive output signal.

11. Solenoid valve device (10) according to one of the preceding claims,
**characterized in that**
in a switched-off state of the control device (12) and/or at switched-off ignition of a vehicle, in which the solenoid valve device (10) is mounted, and the solenoid valve device (10) is configured in such a way to monitor the switching coils (5a) and (5b) and/or the induced coil voltage (Uia, Uib) for a positive voltage pulse
and
at switched-on state of the control device (12) and/or at switched-on ignition to superimpose through a functional device (26) a positive bias voltage (Ubias) on the induced coil voltage (Uia, Uib).

12. Solenoid valve device (10) according to Claim 10 or 11, **characterized in that**
the solenoid valve device (10) is configured in such a way that the bias voltage (Ubias) is switchable and can be switched on only at the output of a switching signal (S1, S2) to switch the armature position.

13. Solenoid valve-device (10) according to one of the preceding claims,
**characterized in that**
sensing windings are provided on the switching coils (5a, 5b) for generating the induced coil voltages (Uia, Uib).

14. Solenoid valve device (10) according to one of the preceding claims,
**characterized in that**
the switching coils (5a, 5b) are formed in a joint yoke (3) and form with the first core (2a) and the armature (6) as well as the permanent magnet (4) a first ferromagnetic circuit, and with the second core (2b), the armature (6) and the permanent magnet (4) a second ferromagnetic circuit,
wherein in the armature positions (I, II) different fluid connections (8a, 8b, 8C) are switched or connected with each other.

15. Method for monitoring a bistable solenoid valve-device (10) according to Claim 1, which has an armature (6), a first switching coil (5a) and a second switching coil (5b) for switching the armatures (6) in a first armature position (I) or a second armature position (II),
wherein through driving a control device (12) for a first switching operation in the first armature position (I) a first switching signal (S1) is output and the second switching coil (5b) has zero current and for a second switching operation in the second armature position (II) a second switching signal (S2) energizing a second switching coil (5b) is output and the first switching coil (5a) has zero current,
wherein both switching coils (5a, 5b) are de-energized in a sleep mode,
wherein in a sleep mode both de-energized switching coils (5a, 5b) are monitored for an induced coil current or induced coil voltage (Uia, Uib) and it is determined whether there is a switching operation.

16. Electropneumatic parking brake, which has a bistable solenoid valve device according to one of the claims 1 to 14,
wherein the bistable solenoid valve device has three pneumatic connections (8a, 8b, 8c) and is adjustable between one venting position for deflating the parking brake and one venting position for inflating the parking brake.

## Revendications

1. Dispositif d'électrovalve (10) bistable pour un système fluidique, en particulier un système à air comprimé, dans lequel le dispositif d'électrovalve (10) bistable présente une électrovalve (1) bistable avec :
un aimant permanent (4),
un induit (6) réglable entre une première position d'induit (I) et une seconde position d'induit (II),
une première bobine de commutation (5a) pour une alimentation en courant en vue d'un réglage de l'induit (6) jusque dans la première position d'induit (I), ainsi qu'une seconde bobine de commutation (5b) pour une alimentation en courant en vue d'un réglage de l'induit (6) jusque dans la seconde position d'induit (II),
dans lequel
un dispositif d'exploitation (14) est prévu pour mesurer une tension de bobine (Uia, Uib) induite et/ou un courant de bobine induit contre au moins une bobine de commutation (5a, 5b) non alimentée en courant et pour évaluer un comportement de commutation de l'induit (6), **caractérisé en ce que** le dispositif d'exploitation (14) est configuré de telle sorte que, dans un mode de repos sans opération de commutation de l'induit (6), il mesure des tensions de bobine (Uia, Uib) induites et/ou des courants induits des deux bobines de commutation (5a, 5b) non alimentées en courant.

2. Dispositif d'électrovalve (10) selon la revendication 1, **caractérisé en ce que**
l'électrovalve (1) bistable présente un premier noyau (2a), un second noyau (2b) et un induit (6) dans un matériau magnétiquement conducteur, dans lequel l'induit (6) s'applique contre le premier noyau (2a) dans la première position d'induit (I) par formation d'un entrefer (9) à l'égard du second noyau (2b), et contre le second noyau (2b) dans la seconde position d'induit (II) par formation d'un entrefer (9) à l'égard du premier noyau (2a).

3. Dispositif d'électrovalve (10) selon la revendication 1 ou 2,
**caractérisé en ce que**
le dispositif d'exploitation (14) est relié à au moins un raccord de bobine des bobines de commutation (5a, 5b) (15a, 15b) et le dispositif d'exploitation (14) est configuré de telle sorte que, dans la au moins une bobine de commutation (5a, 5b) non alimentée en courant, il reçoive ou exploite une tension de bobine (Uia, Uib) induite directement ou via une commutation de fonctionnement (17) pour régler un point de travail ou une limitation d'une tension et/ou d'un courant.

4. Dispositif d'électrovalve (10) selon la revendication 1 ou 2,
**caractérisé en ce que**
le dispositif d'exploitation (14) est configuré de telle sorte qu'il détermine une direction de déplacement ou une direction de commutation de l'induit (6) à partir d'une polarité de la tension de bobine (Uia, Uib) induite et/ou du courant de bobine induit.

5. Dispositif d'électrovalve (10) selon l'une des revendications précédentes,
**caractérisé en ce que**
le dispositif d'exploitation (14) est configuré de telle sorte qu'il détermine une durée (tw) et/ou une hauteur de la tension de bobine (Uia, Uib) induite, p. ex. par comparaison avec une tension de référence, et évalue le comportement de commutation à partir de la détermination.

6. Dispositif d'électrovalve (10) selon la revendication 1,
**caractérisé en ce que**
la tension de bobine (Uia, Uib) induite lors d'un déplacement d'induit involontaire est configurée de telle sorte qu'elle soit reçue par un dispositif d'activation (26, 27), p. ex. un dispositif de réveil (26) ou un dispositif d'interruption (27), qui émet un signal de réveil et/ou un signal d'erreur et/ou un signal d'interruption.

7. Dispositif d'électrovalve (10) selon la revendication 6,
**caractérisé en ce que**
le dispositif de fonctionnement (26) est configuré de telle sorte qu'il forme un signal d'activation ou un signal d'interruption à partir de la tension de bobine (Uia, Uib) induite sans approvisionnement en énergie supplémentaire pour enclencher et/ou activer le dispositif d'exploitation (14) qui se trouve dans un état d'inactivité et/ou un dispositif de commande (12) qui se situe dans une liaison de données avec le dispositif d'exploitation en vue de faire commuter les bobines de commutation (5a, 5b).

8. Dispositif d'électrovalve (10) selon l'une des revendications précédentes,
**caractérisé en ce que**
le dispositif d'exploitation (14) est configuré de telle sorte que, lors d'une opération de commutation de l'induit (6) pilotée par un signal de commande ou un signal de commutation (S1, S2), il mesure ou évalue la tension de bobine (Uia, Uib) induite et/ou le courant de bobine induit contre la bobine de commutation (5a, 5b) non alimentée en courant.

9. Dispositif d'électrovalve (10) selon la revendication 8,
**caractérisé en ce que**
le dispositif d'exploitation (14) est configuré de telle sorte que, lors de la détermination d'une opération de commutation incorrecte, un signal d'erreur soit émis vers le dispositif de commande (12) qui émet le signal de commutation (S1, S2) pour répéter l'opération de commutation, et/ou, lors d'une commutation involontaire, un signal de rappel soit émis.

10. Dispositif d'électrovalve (10) selon l'une des revendications précédentes,
**caractérisé en ce que**
le dispositif d'électrovalve (10) est configuré de telle sorte qu'à une tension de bobine (Uia, Uib) induite négative lors d'un allumage enclenché d'un véhicule, dans lequel est monté le dispositif d'électrovalve (10), est superposée une pré-tension (Ubias) positive pour produire un signal de sortie positif.

11. Dispositif d'électrovalve (10) selon l'une des revendications précédentes,
**caractérisé en ce que**
dans un état coupé du dispositif de commande (12) et/ou lors d'un allumage coupé d'un véhicule, dans lequel est monté le dispositif d'électrovalve (10), et le dispositif d'électrovalve (10) est configuré de telle sorte qu'il surveille les bobines de commutation (5a) et (5b) et/ou la tension de bobine (Uia, Uib) induite quant à une impulsion de tension positive
et
dans un état enclenché du dispositif de commande (12) et/ou lors d'un allumage enclenché par un dispositif de fonctionnement (26), il superpose une pré-tension (Ubias) positive à la tension de bobine (Uia, Uib) induite.

12. Dispositif d'électrovalve (10) selon la revendication 10 ou 11,
**caractérisé en ce que** le dispositif d'électrovalve (10) est configuré de telle sorte que
la pré-tension (Ubias) puisse être commutée et soit enclenchée uniquement lors de l'émission d'un signal de commutation (S1, S2) pour faire varier la position d'induit.

13. Dispositif d'électrovalve (10) selon l'une des revendications précédentes,
**caractérisé en ce que**
des enroulements de détection sont prévus contre les bobines de commutation (5a, 5b) pour former les tensions de bobine (Uia, Uib) induites.

14. Dispositif d'électrovalve (10) selon l'une des revendications précédentes,
**caractérisé en ce que**
les bobines de commutation (5a, 5b) sont formées dans une culasse (3) commune et forment un premier circuit de fer avec le premier noyau (2a) et l'induit (6) ainsi que l'aimant permanent (4), et un second circuit de fer avec le second noyau (2b), l'induit (6) et l'aimant permanent (4),
dans lequel des raccords fluidiques (8a, 8b, 8c) différents sont montés ou reliés ensemble dans les positions d'induit (I, II).

15. Procédé de surveillance d'un dispositif d'électrovalve (10) bistable selon la revendication 1, qui présente un induit (6), une première bobine de commutation (5a) et une seconde bobine de commutation (5b) pour commuter l'induit (6) jusque dans une première position d'induit (I) ou une seconde position d'induit (II),
dans lequel par pilotage d'un dispositif de commande (12), pour une première opération de commutation jusque dans la première position d'induit (I), un premier signal de commutation (S1) est émis et la seconde bobine de commutation (5b) est sans courant, et, pour une seconde opération de commutation jusque dans la seconde position d'induit (II), un second signal de commutation (S2) est émis pour alimenter en courant une seconde bobine de commutation (5b) et la première bobine de commutation (5a) est sans courant,
dans lequel, dans un mode de repos, les deux bobines de commutation (5a, 5b) ne sont pas alimentées en courant,
dans lequel, dans le mode de repos, les deux bobines de commutation (5a, 5b) non alimentées en courant sont surveillées quant à un courant de bobine induit ou une tension de bobine (Uia, Uib) induite et à partir de la surveillance est déterminé si une opération de commutation se présente.

16. Frein de stationnement électropneumatique qui présente un dispositif d'électrovalve bistable selon l'une des revendications 1 à 14,
dans lequel le dispositif d'électrovalve bistable présente trois raccords pneumatiques (8a, 8b, 8c) et peut être réglé entre une position de purge pour purger le frein à main et une position de ventilation pour ventiler le frein à main.
